# EUROPEAN PATENT APPLICATION

(11) **EP 1 553 199 A1**
(43) Date of publication of application: **13.07.2005**
(21) Application number: 03741293.9
(22) Date of filing: 09.07.2003
(51) Int. Cl.: C22C 38/00, C22C 38/58, F16L 19/08, F16K 27/00

(54) **PARTS FOR FLUID**

(30) Priority: 09.07.2002 JP 2002199906
(71) Applicant: Fujikin Incorporated, Osaka-shi, Osaka 550-0012 (JP)
(72) Inventor: MATSUHASHI, Ryo, c/o NIPPON STEEL CORPORATION, Futtsu-shi, Chiba 293-0011 (JP); SUETSUGU, Kazuhiro, c/o NIPPON STEEL CORPORATION, Tokyo 100-0004 (JP); MIYAGAWA, Hideyuki, c/o FUJIKIN INCORPORATED, Osaka-shi, Osaka 550-0012 (JP); KITA, Toshio, c/o FUJIKIN INCORPORATED, Osaka-shi, Osaka 550-0012 (JP); SOGABE, Kyota, c/o FUJIKIN INCORPORATED, Osaka-shi, Osaka 550-0012 (JP); YOSHIKAWA, Kazuhiro, c/o FUJIKIN INCORPORATED, Osaka-shi, Osaka 550-0012 (JP); MORIMOTO, Akihiro, c/o FUJIKIN INCORPORATED, Osaka-shi, Osaka 550-0012 (JP); SATO, Jyunji, c/o FUJIKIN INCORPORATED, Osaka-shi, Osaka 550-0012 (JP); DAIDO, Kunihiko, c/o FUJIKIN INCORPORATED, Osaka-shi, Osaka 550-001 (JP); SOGAO, Masahiko, c/o FUJIKIN INCORPORATED, Osaka-shi, Osaka 550-0012 (JP); CHIKAIKE, Yoshiaki, c/o FUJIKIN INCORPORATED, Osaka-shi, Osaka 550-0012 (JP)
(74) Representative: Paul, Dieter-Alfred, Dipl.-Ing.
(86) International application number: PCT/JP2003/008696
(87) International publication number: WO 2004/005569

(57) **Abstract**

A specified metal member (e.g., a bolt) 5 included among a plurality of components 2, 3, 4, 5, 6 of a fluid handling part and having a surface exposed on an exterior of the fluid handling part is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

## Description

### TECHNICAL FIELD

The present invention relates to fluid handling parts, such as couplings for use in piping systems and valves or like fluid control devices for use in fluid control apparatus, and more particularly to fluid handling parts suitable for use in apparatus for manufacturing pharmaceuticals and foods.

### BACKGROUND ART

Couplings, valves, and the like (to be referred to collectively as "fluid handing parts") are generally used as parts for universal use in fluid control apparatus and various piping systems. Conventional fluid handling parts include metal parts which are generally made of SUS316. Sophisticated characteristics as to corrosion resistance to chlorides, acid resistance, high strength, etc. are required of these fluid handling parts in accordance with the application and the environment wherein they are used. If an attempt is made to improve members of SUS316 in corrosion resistance so as to render the member usable in pharmaceutical or food manufacturing apparatus wherein solutions of high salt concentration is handled, there arises another problem anew such as a reduction in strength or hardness, so that it has been almost impossible to improve the corrosion resistance only of conventional fluid handling parts conforming to the required specifications, while permitting the fluid handling part to retain the other characteristics.

An object of the present invention is to provide a fluid handling part which is improved in corrosion resistance while retaining the other properties.

### DISCLOSURE OF THE INVENTION

The present invention provides a valve, coupling or like fluid handling part for use in piping and fluid control devices which is composed of a plurality of components, the plurality of components including a specified metal member having a surface exposed on an exterior of the fluid handling part, the fluid handling part being characterized in that the metal member is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

The material used for the fluid handling part is an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities. Accordingly, the part can be improved in corrosion resistance without entailing a reduction in strength and in hardness which has been a disadvantage resulting from the improvement in corrosion resistance.

Although the coupling, valve, etc. are exemplified as fluid handling parts, these are not limitative; the invention can be embodied also as various other parts.

For example, a preferred embodiment of fluid handling part is a valve comprising a body, an actuator, a diaphragm, and bolts for fastening these components together. The bolts are made of the above alloy. The actuator is, for example, an assembly of bonnet, valve stem, piston, casing and handle. Alternatively, the actuator is an assembly comprising a bonnet, valve stem, valve disk holder, spring, upper and lower casings and handle. Each of the actuator and the diaphragm constituting the valve then becomes easy to replace, with the body of the valve incorporated in a piping system. The valve is also easy to assemble. Moreover, after the components are fastened together by the bolts, the bolts can be prevented from corrosion and can therefore be precluded from breaking owing to corrosion, rendering the fluid handling part serviceable for a prolonged period of time. In the case of the valve described, at least one of components other than the bolt, i.e., at least one of the body, handle and actuator may of course be made of the above alloy.

Another preferred embodiment of fluid handling part is a flareless pipe coupling which comprises a tubular body (coupling member) having an externally threaded end portion, a front and a back ring fitted around a pipe, and a cap nut for tightening up the two rings as held between the threaded portion and the nut, the cap nut being made of the alloy described above. The pipe coupling thus constructed produces a fluid-tight sealing effect, while the pipe coupling is easy to assemble. Moreover, once the components are fastened together by the cap nut, the cap nut is prevented from corrosion and can therefore be precluded from breaking owing to corrosion, rendering the fluid handling part usable for a prolonged period of time. In the case of this pipe coupling, at least one of the body and the rings may of course be made of the alloy described. Alternatively, the pipe coupling may comprise a first and a second tubular coupling member to be butted against each other with a gasket interposed therebetween, and a cap nut for fastening the two coupling members together.

### BRIEF DESCRIPTION OF THE DRAWINGS

FIG. 1 is an exploded perspective view showing a valve as a first embodiment of fluid handling part according to the invention.
FIG. 2 is an exploded view in longitudinal section showing a pipe coupling as a second embodiment of fluid handling part according to the invention.
FIG. 3 is a view in longitudinal section showing the pipe coupling of FIG. 2 as assembled.

### BEST MODE OF CARRYING OUT THE INVENTION

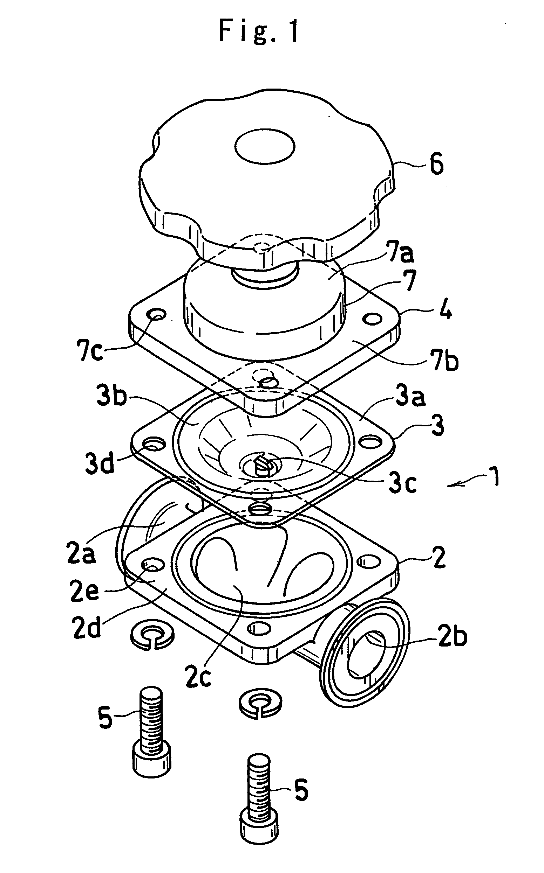

Embodiments of the present invention will be described below with reference to the drawings. FIG. 1 shows a first embodiment of fluid handling part of the invention.

The fluid handling part 1 of the embodiment is a valve, which comprises a body 2 having a fluid inlet channel 2a and a fluid outlet channel 2b, a diaphragm 3 for opening or closing the fluid channels 2a, 2b of the body 2, an actuator 4 having a handle 6 and adapted to move the diaphragm 3 between an open position and a closed position, and bolts 5 for fastening these components 2, 3, 4 together.

The body 2 has a circular cavity 2c formed in its center and facing upward. The fluid inlet channel 2a and the fluid outlet channel 2b are opened to the cavity 2c. The body 2 has around the cavity 2c an opening edge portion 2d which is square. Bolt holes 2e are formed respectively in the four corners of the edge portion 2d The diaphragm 3 comprises a square diagram 3a having an end of a suspending member 3c embedded therein, and a circular diaphragm 3b provided in intimate contact with the upper surface of the square diaphragm 3a The square diaphragm 3a has four corners extending outward beyond the circular diaphragm 3b and provided with respective bolt holes 3d. The actuator 4 comprises a hollow cylindrical bonnet 7 having a top wall 7a, and a square flange 7b provided at the lower end of the bonnet 7 and having internally threaded portions 7a in the respective four corners thereof. The body 2, the diaphragm 3 and the actuator 4 are lapped over one another so that the square diagram 3a of the diaphragm 3 has its outer peripheral portion held between the flange 7b of the bonnet 7 and the opening edge portion 2d of the body 2. The bolts 5 are inserted through the bolts holes 2e of the body 2 and the bolt holes 3d of the diaphragm 3 from below the body 2 and screwed into the internally threaded portions 7c of the bonnet 7 of the actuator 4, whereby the valve 1 is assembled.

As to the materials of the members 2, 3, 4, 5, the body 2 is made of SUS316, the square diaphragm 3a is made of PTFE, the circular diaphragm 3b is made of butyl rubber, the actuator 4 is made of aluminum, and the bolts 5 are made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

The alloy for use as the material of the bolts has high corrosion resistance to chlorides and is in no way inferior to common stainless steels such as SUS316 in properties other than corrosion resistance. For example, the alloy has about 1.5 times the proof stress of SUS316. Accordingly, the valve 1 available remains unimpaired in these other properties while additionally exhibiting the advantage that the corrosion of the exposed surfaces of bolts 5 is prevented. For this reason, the valve 1 is readily usable in food or pharmaceutical manufacturing apparatus wherein solutions of high salt concentration are handled. When required, the same alloy as the material of the bolts is of course usable also for the body 2 and the actuator 4.

With this valve (fluid handling part) 1, the actuator 4 can be changed over from the normally open type to the normally closed type, *and vice versa.* Further the illustrated actuator 4, which is of the manual type, can be replaced by an actuator which has a joint opening for an air inlet pipe and which is automatically openable or closable. The illustrated body 2, which is of the clamp connection type, can be replaced by the flange connection type. The actuator 4 and the diaphragm 3 can be replaced even with the body 2 incorporated in a piping system, with the result that the piping system including the valve 1, and the apparatus concerned can be disassembled and assembled easily.

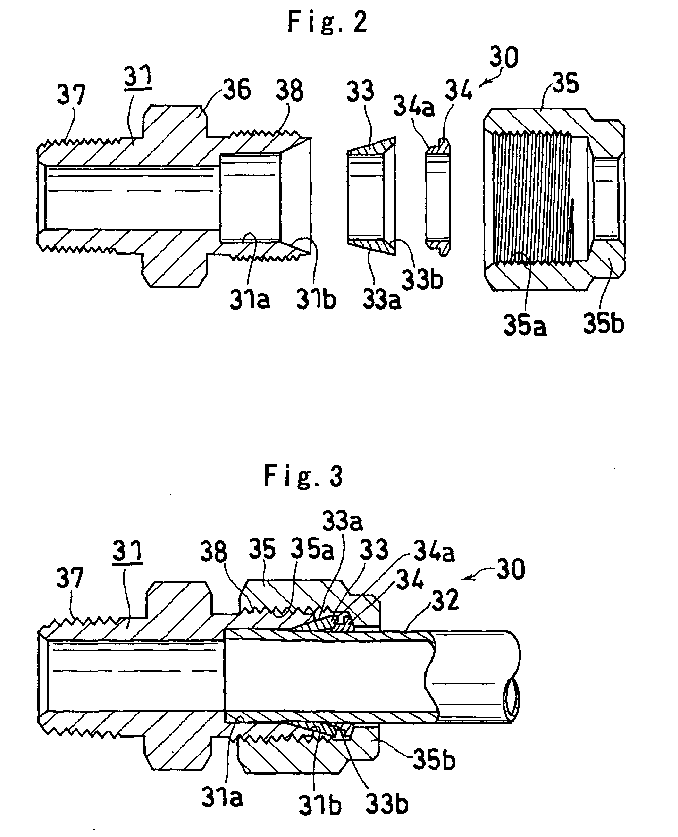

FIGS. 2 and 3 show a second embodiment of fluid handling part of the present invention. In the following description, the left-hand side of these drawings will be referred to as "front," and the right-hand side thereof as "rear."

The fluid handling part 30 of this embodiment is a pipe joint, which comprises a tubular body (coupling member) 31 for a pipe 32 to be inserted in through the rear end thereof, a front ring 33 and a back ring 34 which are to be fitted around the pipe 32 projecting from the rear end of the body 31, and a cap nut 35 for tightening up the front and back rings 33, 34 to fix the pipe 32 to the body 31.

The body 31 has an outer flange 36 formed around the outer periphery of an intermediate portion thereof and externally threaded portions 37, 38 respectively at front and rear end portions thereof. The inner periphery of the body 31 has a large-diameter rear-end portion 31a slightly larger than the front portion of the body inner periphery. The body 31 has a tapered face 31b formed on the inner periphery of its rear end and tapered toward the front.

The cap nut 35 is provided at the front-end side thereof with an internally threaded portion 35a, which is screwed on the externally threaded rear-end portion 38 of the body 31. The cap nut 35 has an inner flange 35b at the rear end thereof.

The front ring 33 is provided on its outer periphery with a tapered face 33a shaped in conformity with the shape of the tapered face 31b at the rear end of the body 31. The front ring 33 has an annular recess 33b formed at the inner periphery of its rear end and tapered toward the front. The back ring 34 is provided at its front end with an annular projection 34a tapered toward the front and fittable into the recess 33b of the front ring 33.

When the cap nut 35 of the pipe coupling 30 is tightened, the front face of the inner flange 35b of the cap nut 35 comes into bearing contact with the rear face of the back ring 34, advancing the back ring 34, whereby the projection 34a of the back ring 34 is fitted into the recess 33b of the front ring 33. The front ring 33 is moved forward along with the back ring 34 and has its front end brought into contact with the tapered face 31b of the body 31. When the cap nut 35 is further tightened up, the respective front ends of the front ring and the back ring 34 are deformed inward, caused to bite into the pipe 31 and firmly pressed against the pipe 32.

As the materials of the members 31, 33, 34, 35, the body 31, front ring 33 and back ring 34 are made of SUS316, and the cap nut 35 is made of an alloy comprising, in % by weight, 0. 001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

The alloy for use as the material for the cap nut 35 has high corrosion resistance to chlorides and is in no way inferior to common stainless steels such as SUS316 in properties other than corrosion resistance. For example, the alloy has about 1.5 times the proof stress of SUS316. Accordingly, the pipe coupling 30 available remains unimpaired in these other properties while additionally exhibiting the advantage that the corrosion of the exposed surface of cap nut 35 is prevented. For this reason, the pipe coupling 30 is readily usable in food or pharmaceutical manufacturing apparatus wherein solutions of high salt concentration are handled. The same alloy as the material of the cap nut 35 is of course usable also for the body 31 when so required.

### INDUSTRIAL APPLICABILITY

The fluid handling part of the invention has high corrosion resistance, is usable as a coupling for use in piping systems and as a valve for use in fluid control apparatus, is suitable especially for use in pharmaceutical or food manufacturing apparatus.

## Claims

1. A valve, coupling or like fluid handling part for use in piping and fluid control devices which is composed of a plurality of components, the plurality of components including a specified metal member having a surface exposed on an exterior of the fluid handling part, the fluid handling part being **characterized in that** the metal member is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

2. A fluid handling part according to claim 1 which is a valve comprising a body, an actuator, a diaphragm and bolts for fastening these components together, each of the bolts being the specified metal member.

3. A fluid handling part according to claim 1 which is a pipe coupling to be assembled by tightening up a cap nut as screwed on an externally threaded portion provided on an outer periphery of a tubular coupling member, the cap nut being the specified metal member.
